# EUROPÄISCHE PATENTSCHRIFT

(11) **EP 3 144 426 B1**
(45) Veröffentlichungstag und Bekanntmachung des Hinweises auf die Patenterteilung: **29.05.2019**
(21) Anmeldenummer: 16174287.9
(22) Anmeldetag: 14.06.2016
(51) Int. Cl.: D06M 15/693, C08J 5/04, D06N 3/10, D06N 3/04, B32B 25/00, B32B 25/02, B32B 25/10, D06M 11/46

(54) **FLEXIBLER ARTIKEL AUF DER BASIS WENIGSTENS EINER ELASTOMERMISCHUNG**
FLEXIBLE ARTICLES BASED ON AT LEAST ONE ELASTOMERIC COMPOSITION
ARTICLE SOUPLE A BASE D'AU MOINS UN MELANGE ELASTOMERE

(30) Priorität: 17.09.2015 DE 102015217885
(43) Veröffentlichungstag der Anmeldung: 22.03.2017
(73) Patentinhaber: ContiTech Elastomer-Beschichtungen GmbH, 30165 Hannover (DE)
(72) Erfinder: Haake, Anne, 30159 Hannover (DE); Storre, Jens, 37176 Nörten-Hardenberg (DE); Passon-Wesseloh, Barbara, 37073 Göttingen (DE); Rother, Gabriele, 37079 Göttingen (DE)
(74) Vertreter: Preusser, Andrea

(56) Entgegenhaltungen:
- DE-A1-102013 104 945
- GB-A- 2 230 255
- JP-A- H06 287 865
- KR-B1- 100 924 114
- US-A- 3 840 488

## Beschreibung

Die Erfindung betrifft einen flexiblen Artikel auf der Basis wenigstens einer Elastomermischung, der wenigstens eine textile Festigkeitsträgerschicht und / oder eine Elastomermischung mit textilen Fasern enthält.

Bei einem derartigen flexiblen Elastomerartikel kann es sich um flexible Behälter, Zelte, Planen, Membranen, Schutzanzüge, Faltenbälge, Drucktücher, Schläuche, Antriebsriemen, Fördergurte, Luftfedern, Schwingungsdämpfer und dergleichen.

Die oben genannten Artikel weisen in der Regel wenigstens eine textile Festigkeitsträgerschicht, zumeist in Form einer Gewebeschicht, oder textile Fasern in der Elastomermischung auf.

Die textile Festigkeitsträgerschicht ist hierbei in der Regel ein- oder beidseitig mit wenigstens einer Elastomerschicht versehen.

Von besonderer Bedeutung ist hierbei der Haftverbund zwischen der textilen Festigkeitsträgerschicht und der Elastomermischung bzw. den textilen Fasern und der Elastomermischung. Hierzu müssen entweder die textile Festigkeitsträgerschicht oder die textilen Fasern in einem vorgelagerten Prozessschritt haftend ausgestattet werden oder es muss in einem vorgelagerten Prozessschritt eine zusätzliche haftvermittelnde Schicht in Form einer Haftmischung auf den textilen Festigkeitsträger oder die textilen Fasern aufgebracht werden. Zusammensetzungen für derartige haftvermittelnde Schichten werden z.B. in EP1233045A2, EP73174B1, US3840488 oder auch DE2319160A1 beschrieben. Dieser vorgelagerte, zusätzliche Prozessschritt ist nicht nur zeitintensiv, sondern führt auch zu erhöhten Kosten im Herstellverfahren.

Aufgabe der vorliegenden Erfindung ist es daher, insbesondere aus Zeit- und Kostengründen, eine Alternative zu den bereits bekannten Haftvermittlern und / oder Haftmischungen bereitzustellen, die den Haftverbund zwischen dem textilen Festigkeitsträger und der Elastomermischung bzw. der textilen Fasern und der Elastomermischung nicht verschlechtert.

Die Aufgabe wird dadurch gelöst, dass die Elastomermischung gemäß Anspruch 1, die sich in direktem Kontakt zu der Festigkeitsträgerschicht befindet, wenigstens eine Dicarbonsäure enthält und / oder die Elastomermischung, die textile Fasern enthält, wenigstens eine Dicarbonsäure enthält.

Überraschenderweise hat sich gezeigt, dass sich eine gute Haftung der textilen Festigkeitsträgerschicht an die Elastomerschicht des flexiblen Elastomerkörpers ergibt, wenn die Elastomermischung wenigstens eine Dicarbonsäure enthält. Ebenso zeigt sich eine gute Haftung der textilen Fasern an die Elastomermischung bei Vorhandensein wenigstens einer Dicarbonsäure in der Elastomermischung.

Hierdurch wird eine zusätzliche haftfreundliche Präparation des textilen Festigkeitsträgers bzw. der textilen Fasern oder das Aufbringen einer haftvermittelnden Schicht überflüssig. In einer besonders geeigneten Ausführungsform ist der flexible Elastomerartikel somit frei von Haftvermittlern und haftvermittelnden Schichten, d.h. die textile Festigkeitsträgerschicht bzw. die textilen Fasern werden nicht haftend ausgestattet und es befindet sich in dem flexiblen Elastomerartikel keine Haftschicht und auch keine weiteren haftvermittelnden Substanzen. Somit kann gleichzeitig die Gesamtdicke und dadurch auch das Gesamtgewicht des Artikels reduziert werden.

Die vorhandene textile Festigkeitsträgerschicht kann als Filz, Vlies, Gewebe, Geflecht, Gewirk oder Gestrick, Gelege ausgebildet sein. Es ist auch möglich, dass die Festigkeitsträgerschicht aus Komponenten aus Filz, Vlies, Gewebe, Geflecht, Gewirk oder Gestrick, Gelege ausgebildet ist.

Ist in dem Elastomerartikel eine Elastomermischung mit textilen Fasern vorhanden, so handelt es sich bei den textilen Fasern bevorzugt um Pulpen und / oder um Kurzfasern, mit einer Länge von 3 bis 9 mm, besonders bevorzugt mit einer Länge von 3 bis 5mm.

Als Materialien für die textile Festigkeitsträgerschicht und / oder die textilen Fasern können alle der fachkundigen bekannten und geeigneten Materialien verwendet werden, die bevorzugt ausgewählt sind aus der Gruppe, bestehend aus: Polyamid (PA), z.B. PA6, PA6.6, PA11, PA12, PA6.10, PA6.12, und / oder Copolyamide und / oder Polyester (PES) und / oder Rayon und / oder Polyethylenterephthalat (PET) und / oder Polyethylennaphthalat (PEN) und / oder Polybutylenterephthalat (PBT) und / oder Polycarbonat (PC) und / oder ungesättigtes Polyesterharz (UP) und / oder Poly(1,4-cyclohexandimethylenterephthalat) (PCDT) und / oder Baumwolle und / oder Zellwolle und / oder Polyvinylalkohol (PVAL) und / oder Polyoxibenzonaphtoat und / oder Polyvinylacetal (PVA) und / oder Polyetheretherketon (PEEK) und / oder Polyethylen-2,6-naphthalat (PEN) und / oder Polyphenylen und / oder Polyphenylenoxid (PPO) und / oder Polyphenylensulfid (PPS) und / oder Polphenylenether und / oder Polybenzoxazol (PBO) und / oder Polyoxadiazol (POD) und / oder Polyetherimid (PEI) und / oder m-Aramid und / oder p-Aramid und / oder Glas und / oder Basalt und / oder Metall und / oder Carbon und / oder Keramik und / oder Kohlenstoff und / oder Wolle und / oder Baumwolle und / oder Polypropylen und / oder Melamin und / oder modifizierte Viskose und / oder Gestein und / oder hochkristalline Polymerfasern und / oder Fluorpolymere, wie bspw. Fluorsilikon, Polytetrafluorethylen (PTFE) und Perfluorethylenpropylen (FEP), und /oder Fluor-Copolymere, wie bspw. Poly(vinylidenfluorid-co-hexafluorpropylen) (VDF/HFP), Poly(vinylidenfluorid-co-hexafluorpropylen-co-tetrafluorethylen) (TFB), Poly(vinylidenfluorid-co-tetrafluorethylen-co-perfluormethylvinylether) (VDF/TFE/PMVE), Poly(tetrafluorethylen-co-propylen) (TFE/P) und Poly(vinylidenfluorid-co-chlortrifluorethylen) (VDF/CTFE).

Die Materialien für die Festigkeitsträgerschicht und die Fasern können hierbei alleine oder in Kombination verwendet werden, d.h. es sind insbesondere für die Festigkeitsträgerschicht auch so genannte Hybridsysteme möglich.

Polyphenylensulfid (PPS) und / oder Polphenylenether und / oder Polybenzoxazol (PBO) und / oder Polyoxadiazol (POD) und / oder Polyetherimid (PEI) und / oder m-Aramid und / oder p-Aramid und / oder Glas zeichnen sich durch eine hohe Temperaturbeständigkeit (und Chemikalienbeständigkeit) aus und verbessern dadurch die Brandeigenschaften des Gewebes. Die Kombination mit Polyester (PES) oder Polyamid (PA) macht das Hybridsysteme kostengünstig und reduziert negative Eigenschaften wie z. B. die reduzierte Reißdehnung der hochtemperaturbeständigen Fasern.

Erfindungsgemäß enthält die Elastomermischung des Artikels wenigstens eine Dicarbonsäure. Die Dicarbonsäure wird im Rahmen der Herstellung der Elastomermischung als Mischungsbestandteil in Mengen von 0,1 bis 20 phr, bevorzugt in Mengen von 0,1 bis 20 phr, besonders bevorzugt in Mengen von 0,1 bis 10 phr, ganz besonders bevorzugt in Mengen von 0,5 bis 8 phr, hinzugefügt. Die Verwendung einer Menge von 1 bis 6 phr wenigstens einer Dicarbonsäure zeichnet sich durch einen besonders geringen negativen Einfluss auf die weiteren Mischungseigenschaften aus. Dicarbonsäuren sind organisch-chemische zweibasige Säuren, die zwei Carboxy-Gruppen enthalten. Dicarbonsäuren können in substituierter oder in unsubstituierter Form vorliegen. In unsubstituierter Form haben die Dicarbonsäuren die allgemeine Formel (I)

HOOC-CₙHₘ-COOH (I).

Als Dicarbonsäuren können erfindungsgemäß Oxalsäure, Malonsäure, Bernsteinsäure, Glutarsäure, Adipinsäure, Pimelinsäure, Azelainsäure, Sebacinsäure, Maleinsäure, Fumarsäure, Itaconsäure, Muconsäure, Pthalsäure oder Terepthalsäure alleine oder in Kombination verwendet werden. Besonders gut geeignet ist die Verwendung von Adipinsäure.

Bevorzugt finden die reinen Dicarbonsäuren Verwendung, d.h. es werden nicht die veresterte oder anderweitige Formen und auch nicht Derivate der Dicarbonsäuren eingesetzt.

Die Elastomermischung, die sich in direktem Kontakt zur Festigkeitsträgerschicht befindet, und / oder die Elastomermischung, die textile Fasern enthält, enthält wenigstens eine Elastomerkomponente, wobei die Elastomerkomponente Ethylen-Propylen-Dien-Mischpolymerisat (EPDM) und/oder epoxidierter Naturkautschuk (NR) und/oder Ethylen-Vinylacetat-Kautschuk (EVM) ist.

Die Elastomermischung kann auch andere Kautschukkomponenten enthälten, die bevorzugt ausgewählt sind aus der Gruppe, bestehend aus Ethylen-Propylen-Mischpolymerisat (EPM) und / oder Nitrilkautschuk (NBR) und / oder (teil)hydrierter Nitrilkautschuk (HNBR) und / oder carboxylierter Nitrilkautschuk (XNBR) und / oder Fluor-Kautschuk (FKM) und / oder Chloropren-Kautschuk (CR) und / oder Naturkautschuk (NR) und / oder Styrol-Butadien-Kautschuk (SBR) und / oder Isopren-Kautschuk (IR) und / oder Butylkautschuk (IIR) und / oder Brombutylkautschuk (BIIR) und / oder Chlorbutylkautschuk (CIIR) und / oder Butadien-Kautschuk (BR) und / oder Chloriertes Polyethylen (CM) und / oder Chlorsulfoniertes Polyethylen (CSM) und / oder Polyepichlorhydrin (ECO) und / oder Acrylat-Kautschuk (ACM) und / oder Ethylen-Acrylat-Kautschuk (AEM) und / oder Silikonkautschuk (MQ, VMQ, PVMQ, FVMQ) und / oder fluorierter Methylsilikonkautschuk (MFQ) und / oder perfluorinierter Propylen-Kautschuk (FFPM) und/ oder Perfluorcarbon-Kautschuk (FFKM) und / oder Polyurethan (PU).

Die genannten Kautschuke können hierbei alleine oder im Verschnitt eingesetzt werden. Die genannten Kautschuke können hierbei auch in modifizierter Form vorliegen. Modifizierungen werden in der Kautschukindustrie auch als Funktionalisierungen bezeichnet.

Die Funktionalisierung ist hierbei teilweise oder vollständig und findet vorzugsweise durch Hydroxylgruppen und / oder Epoxygruppen und / oder Siloxangruppen und / oder Aminogruppen und / oder Phtalocyaningruppen und / oder Aminosiloxangruppen und / oder mit Carboxygruppen statt. Es kommen aber auch weitere, der fachkundigen Person bekannte, Funktionalisierungen in Frage.

Besonders gute Haftungseigenschaften ergeben sich bei Verwendung von EVM und / oder EPDM und / oder epoxidiertem NR, d.h. Naturkautschuk, der mit Epoxygruppen teilweise oder vollständig funktionalisiert ist.

Die Begriffe "Elastomerschicht", "Elastomermischung" und "Elastomer" werden in dieser Schrift synonym zu den Begriffen "Kautschukschicht", "Kautschukmischung" und "Kautschuk" verwendet.

Eine weitere Optimierung der Haftung lässt sich überraschenderweise durch das Hinzufügen von Flammschutzmitteln zu der Elastomermischung erreichen.

Bevorzugt handelt es sich hierbei um halogen- und antimontrioxid-freie Flammschutzmittel, wobei hier insbesondere Stannate, wie Zinkstannat oder Zinkhydroxystannat, Hydroxide, wie Magnesiumhydroxid oder Aluminiumhydroxid, Cyanurate, wie Melamincyanurat, Borate, wie Zinkborat, phosphorhaltige Komponenten, wie Resorcinoldiphosphat oder aromatische Polyphosphate, stickstoffhaltige Komponenten, wie Ammoniumphosphat, Intumeszenzgemische, Carbonate, wie Calciumcarbonat oder Magnesiumcarbonat, oder Blähgraphit in Frage kommen.

Als besonders gut geeignet haben sich Stannate, insbesondere Zinkhydroxystannat (ZHS), gezeigt. ZHS ist besonders ungefährlich für den Menschen, so dass keine besonderen Sicherheitsmaßnahmen erforderlich sind.

Die üblichen Mischungsingredienzien der Kautschukschicht umfassen wenigstens einen Vernetzer oder ein Vernetzersystem (Vernetzungsmittel und Beschleuniger). Weitere Mischungsingredienzien sind zumeist noch ein Füllstoff und/oder ein Verarbeitungshilfsmittel und/oder ein Weichmacher und/oder ein Alterungsschutzmittel sowie gegebenenfalls weitere Zusatzstoff (z.B. Farbpigmente). Diesbezüglich wird auf den allgemeinen Stand der Kautschukmischungstechnologie verwiesen.

## Patentansprüche

1. Flexibler Artikel auf der Basis wenigstens einer Elastomermischung enthaltend wenigstens eine Festigkeitsträgerschicht und / oder wenigstens eine Elastomermischung enthaltend textile Fasern, **dadurch gekennzeichnet, dass** die Elastomermischung, die sich in direktem Kontakt zu der Festigkeitsträgerschicht befindet, wenigstens eine reine Dicarbonsäure enthält und / oder die Elastomermischung, die textile Fasern enthält, wenigstens eine reine Dicarbonsäure enthält und dass die Elastomermischung, die sich in direktem Kontakt zur Festigkeitsträgerschicht befindet, und / oder die Elastomermischung, die textile Fasern enthält, wenigstens eine Elastomerkomponente enthält, wobei die Elastomerkomponente Ethylen-Propylen-Dien-Mischpolymerisat (EPDM) und / oder epoxidierter Naturkautschuk (NR) und / oder Ethylen-Vinylacetat-Kautschuk (EVM) ist.

2. Flexibler Artikel nach Anspruch 1, **dadurch gekennzeichnet, dass** die Elastomermischung , die sich in direktem Kontakt zu der Festigkeitsträgerschicht befindet, zusätzlich wenigstens ein Flammschutzmittel enthält und / oder die Elastomermischung, die textile Fasern enthält, zusätzlich wenigstens ein Flammschutzmittel enthält.

3. Flexibler Artikel nach Anspruch 2, **dadurch gekennzeichnet, dass** das Flammschutzmittel Zinkstannat und / oder Zinkhydroxystannat ist.

4. Flexibler Artikel nach einem der Ansprüche 1 bis 3, **dadurch gekennzeichnet, dass** die Dicarbonsäure Adipinsäure ist.

5. Flexibler Artikel nach einem der Ansprüche 1 bis 4, **dadurch gekennzeichnet, dass** die Elastomermischung, die sich in direktem Kontakt zu der Festigkeitsträgerschicht befindet, EVM als Elastomerkomponente enthält und / oder die Elastomermischung, die textile Fasern enthält, EVM als Elastomerkomponente enthält.

## Claims

1. Flexible article based on at least one elastomer mixture containing at least one strength member layer and/or at least one elastomer mixture containing textile fibres, **characterized in that** the elastomer mixture which is in direct contact with the strength member layer contains at least one pure dicarboxylic acid and/or the elastomer mixture which contains textile fibres contains at least one pure dicarboxylic acid and **in that** the elastomer mixture which is in direct contact with the strength member layer and/or the elastomer mixture which contains textile fibres contains at least one elastomer component, wherein the elastomer component is ethylene-propylene-diene copolymer (EPDM) and/or epoxidized natural rubber (NR) and/or ethylenevinyl acetate rubber (EVM).

2. Flexible article according to Claim 1, **characterized in that** the elastomer mixture which is in direct contact with the strength member layer additionally contains at least one flame retardant and/or the elastomer mixture which contains textile fibres additionally contains at least one flame retardant.

3. Flexible article according to Claim 2, **characterized in that** the flame retardant is zinc stannate and/or zinc hydroxystannate.

4. Flexible article according to any of Claims 1 to 3, **characterized in that** the dicarboxylic acid is adipic acid.

5. Flexible article according to any of Claims 1 to 4, **characterized in that** the elastomer mixture which is in direct contact with the strength member layer contains EVM as the elastomer component and/or the elastomer mixture which contains textile fibres contains EVM as the elastomer component.

## Revendications

1. Article flexible à base d'au moins un mélange d'élastomère contenant au moins une couche de renfort et/ou au moins un mélange d'élastomère contenant des fibres textiles, **caractérisé en ce que** le mélange d'élastomère qui se trouve en contact direct avec la couche de renfort contient au moins un acide dicarboxylique pur et/ou le mélange d'élastomère qui contient des fibres textiles contient au moins un acide dicarboxylique pur, et **en ce que** le mélange d'élastomère qui se trouve en contact direct avec la couche de renfort et/ou le mélange d'élastomères qui contient des fibres textiles contiennent au moins un composant élastomère, le composant élastomère étant un copolymère d'éthylène-propylène-diène (EPDM) et/ou un caoutchouc naturel époxydé (NR) et/ou un caoutchouc d'éthylène-acétate de vinyle (EVM).

2. Article flexible selon la revendication 1, **caractérisé en ce que** le mélange d'élastomère qui se trouve en contact direct avec la couche de renfort contient en outre au moins un agent ignifuge et/ou le mélange d'élastomère qui contient des fibres textiles contient en outre au moins un agent ignifuge.

3. Article flexible selon la revendication 2, **caractérisé en ce que** l'agent ignifuge est le stannate de zinc et/ou l'hydroxystannate de zinc.

4. Article flexible selon l'une quelconque des revendications 1 à 3, **caractérisé en ce que** l'acide dicarboxylique est l'acide adipique.

5. Article flexible selon l'une quelconque des revendications 1 à 4, **caractérisé en ce que** le mélange d'élastomère qui se trouve en contact direct avec la couche de renfort contient de l'EVM en tant que composant élastomère et/ou le mélange d'élastomère qui contient des fibres textiles contient de l'EVM en tant que composant élastomère.
